# EUROPEAN PATENT APPLICATION

(11) **EP 4 822 788 A1**
(43) Date of publication of application: **14.10.2026**
(21) Application number: 24927448.1
(22) Date of filing: 04.07.2024
(51) Int. Cl.: H01M 4/86, H01M 4/92, H01M 8/1004, H01M 8/10

(54) **ELECTRODE SLURRY FOR REPAIRING CRACKS, CATALYST LAYER FOR FUEL CELL, MEMBRANE-ELECTRODE ASSEMBLY, AND FUEL CELL**

(30) Priority: 29.02.2024 KR 20240029388; 03.07.2024 KR 20240087823
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Vossius & Partner Patentanwälte Rechtsanwälte mbB
(86) International application number: PCT/KR2024/009439
(87) International publication number: WO 2025/183275

(57) **Abstract**

Disclosed herein is an electrode slurry capable of repairing cracks in an electrode. According to an aspect of the present invention, provided is an electrode slurry for repairing cracks, the electrode slurry comprising at least 60 wt% of a first solvent that has a surface tension of at most 40 mN/m at 20°C, wherein the electrode slurry has a surface tension of at most 65 mN/m at 20 °C, a viscosity of at most 100 cP at 20 °C, and a total solids content of at most 12 wt%.

## Description

### Technical Field

The present disclosure relates to an electrode slurry for repairing cracks, and more specifically, to an electrode slurry for repairing cracks, a catalyst layer for a fuel cell, a membrane-electrode assembly, and a fuel cell.

### Background Art

Fuel cells are batteries that directly convert chemical energy generated by oxidation of fuel into electrical energy, and are attracting attention as a next-generation energy source due to their high energy efficiency and eco-friendly characteristics with low pollutant emissions. Such fuel cells generally have a structure in which an anode and a cathode are formed on both sides of a polymer electrolyte membrane, respectively, and such a structure is referred to as a membrane-electrode assembly (MEA). The fuel cells may be classified according to the type of electrolyte membrane into alkaline electrolyte fuel cells, polymer electrolyte membrane fuel cells (PEMFCs), etc. Among these fuel cells, the polymer electrolyte membrane fuel cells are attracting attention as portable, automotive, and home power supply devices due to their advantages such as a low operating temperature of less than 100°C, fast start-up and response characteristics, and excellent durability. Representative examples of such polymer electrolyte membrane fuel cells include proton exchange membrane fuel cells (PEMFCs) that use hydrogen gas as fuel, etc.

Meanwhile, in the polymer electrolyte membrane fuel cell, a crack may occur in the electrode formed on one surface of the polymer electrolyte membrane as the polymer electrolyte membrane shrinks or swells for various reasons. When a commercial electrode slurry is used to repair this crack, a problem may arise in that the electrode slurry is applied only to a peripheral region surrounding the crack, causing the depth of the crack to become even deeper.

### DISCLOSURE

### Technical Problem

An object of the present disclosure is to provide an electrode slurry capable of repairing a crack in an electrode.

Another object of the present disclosure is to provide an electrode slurry for repairing cracks that may improve durability, heat dissipation effect, catalytic reaction efficiency, or moisture retention capacity.

Still another object of the present disclosure is to provide a membrane-electrode assembly with both improved performance and durability.

Yet another object of the present disclosure is to provide a fuel cell including the membrane-electrode assembly.

The objects of the present disclosure are not limited to the above-mentioned objects, and other objects and advantages of the present disclosure not mentioned may be understood through the following description and will be more clearly understood through embodiments of the present disclosure. In addition, it will be readily apparent that the objects and advantages of the present disclosure may be realized by the means and combinations thereof set forth in the claims.

### Technical Solution

According to a first aspect of the present disclosure for achieving the above objects, there is provided an electrode slurry for repairing cracks, which contains 60 wt% or more of a first solvent having a surface tension of 40 mN/m or less at 20°C, and has a surface tension of 65 mN/m or less at 20°C, a viscosity of 100 cP or less at 20°C, and a total solid content of 12 wt% or less.

According to a second aspect of the present disclosure, in the first aspect, the first solvent may comprise at least one selected from the group consisting of an alcohol, acetic acid, propionic acid, oleic acid, carbon tetrachloride, pyrrole, and pyridine.

According to a third aspect of the present disclosure, in the first or second aspect, the electrode slurry for repairing cracks may further contain a second solvent having a surface tension of more than 40 mN/m at 20°C, wherein the content of the second solvent may be 10 wt% or less based on the total weight of the electrode slurry for repairing cracks.

According to a fourth aspect of the present disclosure, in any one of the first to third aspects, the electrode slurry for repairing cracks may further contain functional nanoparticles.

According to a fifth aspect of the present disclosure, in the fourth aspect, the functional nanoparticles may comprise at least one selected from the group consisting of radical-scavenging nanoparticles, catalyst nanoparticles, heat-dissipating nanoparticles, and hygroscopic nanoparticles.

According to a sixth aspect of the present disclosure, in any one of the first to fifth aspects, the electrode slurry for repairing cracks may further contain a binder dispersion containing a binder. Here, the binder may be any one selected from the group consisting of a fluorinated ion conductor, a hydrocarbon-based ion conductor, and a mixture thereof.

According to a seventh aspect of the present disclosure, there is provided a catalyst layer for a fuel cell, comprising: a first catalyst layer comprising a crack region; and a second catalyst layer on the first catalyst layer, wherein a portion of the second catalyst layer corresponding to the crack region comprises a first region, which extends along a crack surface and contains a first binder, and a second region, which is different from the first region and contains a second binder, and wherein the content of the first binder per unit volume in the first region is higher than the content of the second binder per unit volume in the second region.

According to an eighth aspect of the present disclosure, in the seventh aspect, the height of the first region in a direction intersecting the direction in which the crack surface extends may be more than 0 µm and 2 µm or less.

According to a ninth aspect of the present disclosure, there is provided a membrane-electrode assembly comprising the catalyst layer for a fuel cell according to the seventh or eighth aspect.

According to a tenth aspect of the present disclosure, there is provided a fuel cell comprising the membrane-electrode assembly according to the ninth aspect.

The foregoing technical solutions to the above-mentioned problems do not enumerate all of the features of the present disclosure and may be combined with some embodiments of the present specification. Various features of the present disclosure and the resulting advantages and effects will be understood in more detail with reference to the following detailed description.

### Advantageous Effects

According to one aspect of the present disclosure, it is possible to solve the problem that when a conventional commercial electrode slurry is used to repair a crack in an electrode, the electrode slurry is applied only to a peripheral region surrounding the crack, causing the depth of the crack to become even deeper.

According to another aspect of the present disclosure, it is possible to provide an electrode slurry that improves both the performance and durability of a membrane-electrode assembly by repairing the crack.

According to still another aspect of the present disclosure, it is possible to provide an electrode slurry that improves chemical durability, heat dissipation effect, catalytic reaction efficiency, or moisture retention capacity.

In addition to the effects described above, specific effects of the present disclosure will be described below together with specific contents for carrying out the present disclosure.

### Brief Description of Drawings

Fig. 1A is a cross-sectional view of a catalyst layer for a fuel cell with repaired cracks according to one embodiment of the present disclosure.
Fig. 1B is an enlarged view of a portion of a second catalyst layer, placed at a position corresponding to a crack region shown in Fig. 1A.
Fig. 2 is a schematic diagram illustrating a fuel cell according to one embodiment of the present disclosure.
Fig. 3 is optical microscope images of catalyst layers for a fuel cell with repaired cracks according to Example 1 and Comparative Example 1.
Fig. 4 is a graph regarding the performance of membrane-electrode assemblies according to Comparative Examples 1 and 2 and Example 1.

### Best Mode

In the present specification, singular expressions include plural expressions unless the context clearly indicates otherwise.

In the present specification, the term "comprise" and/or "comprising" is intended to denote the existence of stated shapes, steps, numbers, operations, members, elements, and/or combinations thereof, but does not exclude the existence or addition of one or more other shapes, steps, numbers, operations, members, elements, and/or combinations thereof.

In the present specification, "at least one of a, b, and c" may include a, b, or c alone, or a combination of two or more selected from the group consisting of a, b, and c.

When multiple embodiments are described in the present specification, these embodiments may be combined with each other unless otherwise particularly stated. In this case, the effects of the present disclosure may be defined as including not only the effect resulting from each embodiment itself, but also the effect resulting from the organic combination of embodiments. For example, even if Embodiments 1 and 2 are described independently in the present specification, Embodiments 1 and 2 may be organically combined with each other, and the effects of the present disclosure may include effects resulting from the combination of Embodiments 1 and 2, unless the context clearly indicates otherwise.

In the present specification, the range of numerical values expressed using the term "to" denotes a range of numerical values that includes numerical values described before and after the term "to" as a lower limit value and an upper limit value. When a plurality of numerical values as the upper and lower limits of an arbitrary numerical range are disclosed in the present specification, the numerical range disclosed in the present specification may be understood as a range of arbitrary numerical values including any one value among the plurality of lower limit values and any one value among the plurality of upper limit values as a lower limit value and an upper limit value, respectively. For example, if a to b or c to d is described in the specification, it may be understood that a or more and b or less, a or more and d or less, c or more and d or less, or c or more and b or less is described.

In the present specification, terms such as "about" or "substantially" mean a reasonable amount of deviation of the modified term such that the end result is not significantly changed. These terms may be construed as including a deviation of at least ±5% or at least ±10% of the modified term if this deviation would not negate the meaning of the word it modifies.

In the present specification, the term "layer" or "film" may include, when observing a region in which the layer or film exists, not only a case where the layer or film is formed throughout the region, but also a case where the layer or film is formed only in a portion of the region. For example, the surface of the layer or film may be defined as including a flat form, a non-flat form, and a combination thereof; or a continuous form, a discontinuous form, and a combination thereof. For example, when another member is composed of a layer or film directly on one member, the coverage of the other member on the surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more. For example, even when multiple particles form a clustered structure, this structure may be defined as a "layer" or "film". For example, the term "layer" may also include a surface having an irregular or random shape.

In the present specification, the average diameter of particles may be defined as the particle diameter (D₅₀) at which the cumulative percentage in the volume-based particle size distribution curve is 50% when measured by a laser diffraction particle size distribution analyzer. For example, to measure the average diameter of particles, the particle size distribution may be calculated by dispersing the particles to be measured in a dispersion medium, and then introducing the dispersion into a commercially available laser diffraction particle size analyzer (e.g., Microtrac S3500) and measuring the particle size-dependent difference in diffraction patterns when the particles pass through the laser beam.

According to one aspect of the present disclosure for achieving the above objects, there is provided an electrode slurry for repairing cracks, which contains 60 wt% or more of a solvent having a surface tension of 40 mN/m or less at 20°C, and has a surface tension of 65 mN/m or less at 20°C, a viscosity of 100 cP or less at 20°C, and a total solid content of 12 wt% or less. According to one aspect of the present disclosure, it is possible to solve the problem that when a conventional commercial electrode slurry is used to repair a crack in an electrode, the electrode slurry is applied only to a peripheral region surrounding the crack, causing the depth of the crack to become even deeper, and it is possible to provide an electrode slurry that improves both the performance and durability of a membrane-electrode assembly by repairing the crack.

Hereinafter, the configuration of the present disclosure will be described in more detail.

### 1. Electrode Slurry for Repairing Cracks

The electrode slurry for repairing cracks according to the present disclosure contains 60 wt% or more of a first solvent having a surface tension of 40 mN/m or less at 20°C. The surface tension refers to the property of a solvent's surface to contract on its own, aiming to have the smallest possible area. The surface tension may be measured using a capillary rise method or a De Nouy ring surface tension meter. Here, the first solvent is a factor that controls the viscosity and surface tension of the electrode slurry, and consequently, the crack repair effect may vary depending on the content of the first solvent.

In some embodiments of the present disclosure, the surface tension of the first solvent at 20°C may be 5 to 40 mN/m, more specifically, 7 to 39 mN/m, 10 to 35 mN/m, 15 to 30 mN/m, 18 to 25 mN/m, 20 to 24 mN/m, or 21 to 23 mN/m. If the surface tension of the first solvent is outside the above numerical range, it may be difficult to repair a crack formed in the electrode, as the electrode slurry is applied only to a peripheral region surrounding the crack, causing the depth of the crack to become even deeper.

In some embodiments of the present disclosure, the content of the first solvent may be, based on the total weight of the electrode slurry for repairing cracks, more than 60 wt%, more specifically 61 to 95 wt%, 62 to 94 wt%, 63 to 90 wt%, 64 to 85 wt%, 65 to 80 wt%, 65 to 75 wt%, 65 to 70 wt%, 65 to 68 wt%, 65 to 67 wt%, or 65 to 66 wt%. If the content of the first solvent is outside the above numerical range, it may be difficult to repair the crack formed in the electrode, as the electrode slurry is applied only to a peripheral region surrounding the crack, causing the depth of the crack to become even deeper.

In some examples, the first solvent is not particularly limited, but may include at least one selected from the group consisting of an alcohol, acetic acid, propionic acid, oleic acid, carbon tetrachloride, pyrrole, and pyridine. Specifically, the first solvent may be an alcohol, more specifically ethanol.

In some embodiments of the present disclosure, the electrode slurry for repairing cracks may further contain a second solvent having a surface tension of more than 40 mN/m at 20°C. Here, the second solvent may be a factor that controls the viscosity and surface tension of the electrode slurry for repairing cracks. According to some embodiments of the present disclosure, as the second solvent is mixed with the first solvent, the effect of dispersing catalyst nanoparticles in the electrode slurry may be further improved.

According to some embodiments of the present disclosure, the content of the second solvent may be, based on the total weight of the electrode slurry for repairing cracks, 10 wt% or less, specifically 1 to 9 wt%, 2 to 8 wt%, 3 to 7 wt%, 4 to 6 wt%, or 5 to 6 wt%. When the content of the second solvent satisfies the above numerical range, a crack formed in the electrode formed due to shrinkage or swelling of the polymer electrolyte membrane may be effectively repaired.

In some examples, the second solvent is not particularly limited, but may include at least one selected from the group consisting of water, glycerol, and an at least about 5M aqueous solution of sodium chloride.

The electrode slurry for repairing cracks according to the present disclosure may have a surface tension at 20°C of 65 mN/m or less, specifically 15 to 62 mN/m, and more specifically 20 to 60 mN/m, 30 to 60 mN/m, 35 to 59 mN/m, 40 to 55 mN/m, or 43 to 50 mN/m. If the surface tension at 20°C of the electrode slurry for repairing cracks is outside the above numerical range, it may be difficult to repair a crack formed in the electrode, as the electrode slurry is applied only to a peripheral region surrounding the crack, causing the depth of the crack to become even deeper. The surface tension of the electrode slurry for repairing cracks may be measured using a capillary rise method or a De Nouy ring surface tension meter.

The electrode slurry for repairing cracks according to the present disclosure may have a viscosity at 20°C of 100 cP or less, specifically 10 to 90 cP, and more specifically 15 to 85 cP, 20 to 80 cP, 25 to 75 cP, 30 to 70 cP, 35 to 65 cP, 38 to 60 cP, 38 to 50 cP, or 38 to 48 cP. If the viscosity of the electrode slurry for repairing cracks is outside the above numerical range, it may be difficult to repair a crack formed in the electrode, as the electrode slurry is applied only to a peripheral region surrounding the crack, causing the depth of the crack to become even deeper. The viscosity of the electrode slurry for repairing cracks may be measured using a conventional viscometer known in the art.

The total solid content of the electrode slurry for repairing cracks according to the present disclosure may be, based on the total weight of the electrode slurry, 12 wt% or less, specifically 11 wt% or less, 10 wt% or less, 0.1 to 10 wt%, 1 to 10 wt%, 2 to 10 wt%, 3 to 10 wt%, 4 to 10 wt%, 5 to 10 wt%, 6 to 10 wt%, 7 to 10 wt%, 8 to 10 wt%, or 9 to 10 wt%. For example, the total solid content of the electrode slurry for repairing cracks may be the content excluding the first and second solvents and the dispersion medium contained in the binder dispersion. Specifically, if the total solid content based on the total weight of the electrode slurry for repairing cracks is outside the above numerical range, it may be difficult to repair a crack formed in the electrode, as the electrode slurry is applied only to a peripheral region surrounding the crack, causing the depth of the crack to become even deeper.

According to some embodiments of the present disclosure, the electrode slurry for repairing cracks may further contain functional nanoparticles. The functional nanoparticles may include, for example, at least one selected from the group consisting of radical-scavenging nanoparticles, catalyst nanoparticles, heat-dissipating nanoparticles, and hygroscopic nanoparticles. Alternatively, the functional nanoparticles may include catalyst nanoparticles and may further include at least one selected from the group consisting of radical-scavenging nanoparticles, heat-dissipating nanoparticles, and hygroscopic nanoparticles.

The radical-scavenging nanoparticles are capable of scavenging oxygen radicals generated during fuel cell operation. The radical-scavenging nanoparticles may include, for example, any one selected from the group consisting of a transition metal, a transition metal ion, a transition metal oxide, a transition metal complex, a noble metal, a noble metal ion, a noble metal oxide, a noble metal complex, and combinations thereof. The transition metal may be any one selected from the group consisting of cerium (Ce), manganese (Mn), tungsten (W), cobalt (Co), vanadium (V), nickel (Ni), chromium (Cr), zirconium (Zr), yttrium (Y), iridium (Ir), iron (Fe), titanium (Ti), molybdenum (Mo), lanthanum (La), and neodymium (Nd). The noble metal may be any one selected from the group consisting of silver (Ag), platinum (Pt), ruthenium (Ru), palladium (Pd), and rhodium (Rh).

The catalyst nanoparticles may be any one selected from the group consisting of platinum-based nanoparticles, Oxygen evolution reaction (OER) catalyst nanoparticles, and combinations thereof.

The platinum-based nanoparticles are nanoparticles that participate in the cell reaction, and may include, for example, any one or more selected from the group consisting of platinum (Pt), palladium (Pd), ruthenium (Ru), iridium (Ir), osmium (Os), and a platinum-M (Pt-M) alloy. Here, M may be any one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh). More specifically, the platinum-M alloy may be any one selected from the group consisting of Pt-Pd, Pt-Sn, Pt-Mo, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and combinations thereof.

According to another embodiment of the present disclosure, the platinum-based nanoparticles may be supported on a carrier. The carrier may be, for example, one selected from the group consisting of a carbon-based carrier, porous inorganic oxide, zeolite, and combinations thereof. The carbon-based carrier may be, for example, at least one selected from the group consisting of graphite, Super P, carbon fibers, carbon sheets, carbon black, ketjen black, denka black, acetylene black, carbon nanotubes (CNTs), carbon spheres, carbon ribbons, fullerenes, activated carbon, carbon nanofibers, carbon nanowires, carbon nanoballs, carbon nanohorns, carbon nanocages, carbon nanorings, carbon aerogel, graphene, stabilized carbon, activated carbon, and combinations thereof, without being limited thereto. The porous inorganic oxide may be, for example, at least one selected from the group consisting of zirconia, alumina, titania, silica, and ceria. The surface area of the carrier may preferably be 50 m²/g or more, and the average particle diameter thereof may be 10 to 300 nm. If the surface area of the carrier is less than the lower limit of the above numerical range, a uniform distribution of metal nanoparticles may not be obtained.

In some examples, the oxygen evolution reaction (OER) catalyst nanoparticles are nanoparticles that promote a reaction that generates oxygen gas and electrons through the oxidation reaction of water. The OER catalyst nanoparticles may include, for example, any one selected from the group consisting of ruthenium oxide (RuO₂), iridium oxide (IrO₂), and a combination thereof.

In some examples, the heat-dissipating nanoparticles are nanoparticles that transfer heat generated during fuel cell operation to the outside of the catalyst layer, and may be, for example, any one or more selected from the group consisting of metal nanoparticles, ceramic nanoparticles, and carbon-based nanoparticles.

In some examples, the metal nanoparticle may be any one selected from the group consisting of Al, Mg, Cu, Ni, Ag, and core-shell nanoparticles that have excellent thermal conductivity. In the core-shell nanoparticles, a metal or metalloid belonging to groups 2 to 15 of the periodic table may be used as the core, and a metal that has excellent thermal conductivity or is relatively stable may be used as the shell. The core-shell nanoparticles may include, for example, Cu@Ag, Fe@Al, or Cu@Au.

In some examples, the ceramic nanoparticles may include one or more selected from the group consisting of boron nitride, aluminum nitride, aluminum oxide, silicon carbide, and beryllium oxide. The ceramic nanoparticles may have the effect of easily transferring heat to the outside of the catalyst layer due to their excellent thermal conductivity and preventing moisture within the catalyst layer from evaporating.

According to one embodiment of the present disclosure, the boron nitride may be hexagonal boron nitride (h-BN). The hexagonal boron nitride has properties and a layered structure, which are similar to graphite, and thus may have excellent thermal conductivity, dielectric properties, and chemical stability at high temperatures.

The carbon-based nanoparticles may include, for example, any one or more selected from the group consisting of carbon nanofibers, carbon black, acetylene black, carbon nanotubes (CNTs), carbon spheres, carbon ribbons, fullerenes, graphene, and activated carbon.

The hygroscopic nanoparticles may be nanoparticles that effectively absorb moisture generated during fuel cell operation. The hygroscopic nanoparticles may include, for example, any one selected from the group consisting of porous silica, zeolite, and polyacrylonitrile (PAN).

According to another embodiment of the present disclosure, the electrode slurry for repairing cracks may further contain a binder dispersion to bind the catalyst nanoparticles together. The binder dispersion may be a mixture of a dispersion medium and a binder (ion conductor). For example, the dispersion medium may be appropriately modified depending on the type of ion conductor.

In some embodiments of the present disclosure, the content of the binder dispersion may be, based on the total weight of the electrode slurry for repairing cracks, 20 to 30 wt%, 21 to 29 wt%, 22 to 28 wt%, 23 to 27 wt%, 24 to 26 wt%, or 25 to 26 wt%. According to some embodiments of the present disclosure, when the content of the binder dispersion satisfies the above numerical range, the effect of binding functional nanoparticles together may be better realized.

In some embodiments of the present disclosure, the content of the binder may be, based on the total weight of the binder dispersion, 5 to 25 wt%, 6 to 24 wt%, 7 to 23 wt%, 8 to 22 wt%, 10 to 20 wt%, 15 to 20 wt%, or 16 to 20 wt%. Here, the binder may refer to the total solid content of the binder dispersion. According to some embodiments of the present disclosure, when the content of the binder satisfies the above numerical range, the performance and physical durability of the electrode formed from the electrode slurry for repairing cracks may be further improved.

The binder may be, for example, any one selected from the group consisting of a fluorinated ion conductor, a hydrocarbon-based ion conductor, and a mixture thereof.

For example, the fluorinated ion conductor may be any one selected from the group consisting of poly(perfluorosulfonic acid), poly(perfluorocarboxylic acid), a copolymer of tetrafluoroethylene and fluorovinyl ether containing a sulfonic acid group, a polystyrene-graft-ethylene-tetrafluoroethylene copolymer, a polystyrene-graft-polytetrafluoroethylene copolymer, and mixtures thereof.

For example, the hydrocarbon-based ion conductor may be any one selected from the group consisting of sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and mixtures thereof.

The electrode slurry for repairing cracks according to the present disclosure may be applied, for example, using any one method selected from the group consisting of slot-die coating, comma coating, spray coating, brushing, and doctor blade coating. Since the electrode slurry for repairing cracks may be applied using various coating methods, it may have the advantage of being easy to apply industrially.

### 2. Catalyst Layer for Fuel Cell and Membrane-Electrode Assembly Including the Same

According to another aspect of the present disclosure, there is provided a catalyst layer for a fuel cell repaired with the electrode slurry for repairing cracks and a membrane-electrode assembly including the same.

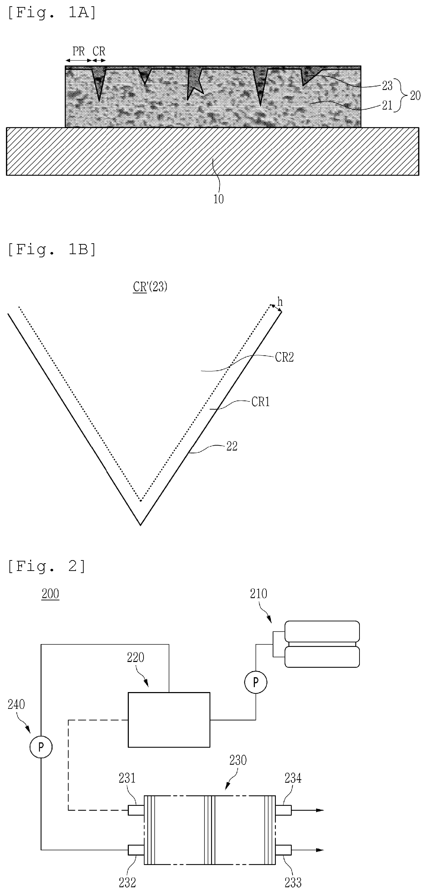

The configuration of the present disclosure will be described in detail below with reference to Fig. 1A.

Fig. 1A is a cross-sectional view of a catalyst layer for a fuel cell with repaired cracks according to one embodiment of the present disclosure.

Referring to Fig. 1A, a catalyst layer 20 for a fuel cell according to the present disclosure may be disposed on at least one surface of a polymer electrolyte membrane 10. The catalyst layer 20 for a fuel cell may include a first catalyst layer 21 and a second catalyst layer 23 disposed on the first catalyst layer 21. Specifically, the first catalyst layer 21 may be an electrode with cracks formed due to the shrinkage or swelling of the polymer electrolyte membrane 10, and the second catalyst layer 23 may be an electrode formed from the electrode slurry for repairing cracks.

The first catalyst layer 21 may include a crack region CR in which a crack is formed and a peripheral region PR surrounding the crack region CR. The electrode slurry for repairing cracks according to the present disclosure may fill both the crack region CR and peripheral region PR of the first catalyst layer 21, thereby effectively repairing the cracks that have occurred in the electrode, and at the same time, providing a catalyst layer 20 for a fuel cell with a uniform thickness.

The polymer electrolyte membrane 10 according to the present disclosure is not particularly limited, but may be, for example, a single membrane or reinforced composite membrane used in the art. The reinforced composite membrane may be a composite membrane having an ionomer layer formed on the surface thereof by impregnating a porous support with an ionomer to enhance durability. The ionomer may be the same as or different from the ion conductor.

According to another aspect of the present disclosure, there is provided a catalyst layer for a fuel cell, including: a first catalyst layer including a crack region; and a second catalyst layer on the first catalyst layer, wherein a portion of the second catalyst layer corresponding to the crack region includes a first region, which extends along a crack surface and contains a first binder, and a second region which is different from the first region and contains a second binder, wherein the content of the first binder per unit volume in the first region is higher than the content of the second binder per unit volume of the second region.

Fig. 1B is an enlarged view of a portion of the second catalyst layer, placed at a position corresponding to the crack region shown in Fig. 1A.

Referring to Figs. 1A and 1B, a portion CR' of the second catalyst layer corresponding to the crack region CR according to the present disclosure includes a first region CR1 and a second region CR2. Specifically, the first region CR1 may be different from the second region CR2. In some examples, the first region CR1 may overlap with the second region CR2 in a direction intersecting the direction in which a crack surface 22 extends. In some examples, the first region CR1 may be interposed between the second region CR2 and the crack surface 22.

In the first region CR1 according to the present disclosure, the content of the binder (ionomer) per unit volume may be more highly distributed than that in the second region CR2, thereby not only increasing the ion conductivity due to ion channels but also increasing the adhesion between catalyst particles, thus increasing the durability of the catalyst layer.

In some embodiments of the present disclosure, the height h of the first region CR1 in a direction intersecting the direction in which the crack surface 22 extends may be more than 0 µm and 2 µm or less, or 0.1 µm to 1.8 µm. For example, the direction intersecting the direction in which the crack surface 22 extends may be a direction toward the interior or center of a portion (CR') of the second catalyst layer, and specifically, may be a direction perpendicular to the direction in which the crack surface 22 extends (e.g., the direction of the normal vector of the crack surface). Here, the direction in which the crack surface 22 extends may be any one of several directions that may be defined by the crack surface.

In some examples, the shape of the crack surface 22 is not particularly limited, but specifically, it may be V-shaped in cross-section. In some other examples, the crack surface 22 is an interface between the first and second catalyst layers 21, 23, and may have an irregular or random shape.

The first region CR1 according to the present disclosure contains a first binder. Specifically, the first binder may provide ion channels while improving the adhesion between catalyst particles included in the first region. For example, the first binder may be any one selected from the group consisting of the above-described fluorinated ion conductor, hydrocarbon-based ion conductor, and mixture thereof.

The second region CR2 according to the present disclosure contains a second binder. Specifically, the second binder may provide ion channels while improving the adhesion between catalyst particles included in the second region. For example, the second binder may be any one selected from the group consisting of the above-described fluorinated ion conductor, hydrocarbon-based ion conductor, and mixture thereof.

In some examples, the first and second binders may be the same as or different from each other. Here, "the same as or different from each other" may mean that the types and physical properties of binders are the same or different.

The content of the first binder per unit volume in the first region CR1 according to the present disclosure is higher than the content of the second binder per unit volume in the second region (CR2). Specifically, as the content of the first binder per unit volume in the first region is controlled to be higher than the content of the second binder per unit volume in the second region, not only the ion conductivity of the membrane-electrode assembly may be further increased, but the adhesion between catalyst particles may also be increased, thereby further increasing the durability of the catalyst layer.

In some embodiments of the present disclosure, the concentration of the binder per unit volume contained in a portion (CR') of the second catalyst layer corresponding to the crack region may increase from the inside of the portion (CR') of the second catalyst layer toward the crack surface. According to some embodiments of the present disclosure, as the concentration of the binder per unit volume increases from the inside of the portion (CR') of the second catalyst layer toward the crack surface, not only the ion conductivity of the membrane-electrode assembly may be increased, but the adhesion between catalyst particles may also be increased, thereby increasing the durability of the catalyst layer.

According to another aspect of the present disclosure, there may be provided a method for manufacturing a catalyst layer for a fuel cell, including: step (S1) of preparing an electrode having cracks formed therein; step (S2) of applying an electrode slurry for repairing cracks according to some embodiments onto one surface of the electrode having cracks formed therein; and step (S3) of drying a product resulting from step (S2). For example, the electrode having cracks formed therein may be a first catalyst layer.

### 3. Fuel Cell

Fig. 2 is a schematic view illustrating a fuel cell according to one embodiment of the present disclosure.

According to another aspect of the present disclosure, there is provided a fuel cell including the membrane-electrode assembly.

Referring to Fig. 2, a fuel cell 200 according to the present disclosure may include: a fuel supply unit 210 configured to supply a mixed fuel composed of fuel and water; a reforming unit 220 configured to reform the mixed fuel to generate a reformed gas containing hydrogen gas; a stack 230 configured to generate electrical energy by inducing an electrochemical reaction between the reformed gas containing hydrogen gas supplied from the reforming unit 220 and an oxidant; and an oxidant supply unit 240 configured to supply an oxidant to the reforming unit 220 and the stack 230.

The stack 230 may have a plurality of unit cells that generate electrical energy by inducing an oxidation/reduction reaction between a reformed gas containing hydrogen gas supplied from the reforming unit 220 and an oxidant supplied from the oxidant supply unit 240.

Each unit cell means a cell unit that generates electricity, and may include the membrane-electrode assembly that oxidizes/reduces a reformed gas containing hydrogen gas and the oxygen of the oxidant, and separator plates (also called bipolar plates, hereinafter referred to as "separator plates") for supplying the reformed gas containing hydrogen gas and the oxidant to the membrane-electrode assembly. The separator plates are disposed on both sides of the membrane-electrode assembly. At this time, the separator plates located at the outermost sides of the stack, respectively, are also specifically referred to as end plates.

Among the separator plates, one end plate may include a pipe-shaped first supply tube 231 for injecting a reformed gas containing hydrogen gas supplied from the reforming unit 220, and a pipe-shaped second supply tube 232 for injecting oxygen gas, and the other end plate may include a first discharge tube 233 for discharging the remaining unreacted reformed gas containing hydrogen gas from the plurality of unit cells to the outside, and a second discharge tube 234 for discharging the remaining unreacted oxidant from the unit cells to the outside.

In the above fuel cell, the separator, fuel supply unit, and oxidant supply unit constituting the electricity generating unit are those used in conventional fuel cells, and thus detailed description thereof will be omitted herein.

According to some embodiments of the present disclosure, the current density after applying 0.45 V to the fuel cell under conditions of 80°C, 100% RH, and atmospheric pressure may be 2,500 mA/cm² or more as measured using a fuel-cell unit cell evaluation device.

In some embodiments of the present disclosure, after performing 20,000 wet-dry cycles under 2 min wet-2 min dry cycle, 80°C, and air/air, the hydrogen crossover current density of the fuel cell may be 15 mA/cm² or less, 14 mA/cm² or less, 13 mA/cm² or less, 12 mA/cm² or less, 11 mA/cm² or less, or 10 mA/cm² or less. Here, a lower hydrogen crossover current density of the fuel cell may mean that the crack repair effect is better.

Hereinafter, examples of the present disclosure will be described in more detail so that a person skilled in the art to which the present disclosure pertains can easily carry out the present disclosure. However, this is nothing but a mere example, and the scope of rights of the present disclosure is not limited by the following contents.

### [Material Preparation Example: Preparation of Materials]

As catalyst nanoparticles, Pt/C composed of platinum particles with an average diameter (D₅₀) of about 3 to 4 nm supported on carbon particles with an average diameter (D₅₀) of about 30 to 40 nm was used. Ethanol was used as a solvent having a surface tension of 40 mN/m or less at 20°C, and water was used as a solvent having a surface tension greater than 40 mN/m at 20°C. As radical-scavenging particles, CeO₂ nanoparticles with an average particle diameter of 15 nm were used, and as OER catalyst nanoparticles, IrO₂ nanoparticles with an average diameter (D₅₀) of 30 nm were used. As heat-dissipating nanoparticles, h-BN nanoparticles with an average particle diameter of 150 nm were used, and as hygroscopic nanoparticles, porous silica (aerogel) nanoparticles with an average particle diameter of 50 nm were used. As a binder, a commercial Nafion D2020 dispersion (20 wt% PFSA), a mixture of PFSA (perfluorosulfonic acid) and propanol (dispersion medium), was used.

### [Preparation Example 1: Preparation of Electrode Slurry for Repairing Cracks]

### <Comparative Example 1: Commercial Electrode Slurry That Does Not Satisfy Parameters>

An electrode slurry was prepared consisting of 70 wt% of a solvent (water) having a surface tension of more than 40 mN/m at 20°C, 5 wt% of catalyst nanoparticles (Pt/C), and 25 wt% of a binder (Nafion solid content: 20 wt%).

### <Comparative Example 2: Commercial Electrode Slurry That Does Not Satisfy Parameters>

An electrode slurry was prepared consisting of 50 wt% of a solvent (ethanol) having a surface tension of 40 mN/m or less at 20°C, 8 wt% of a solvent (water) having a surface tension of more than 40 mN/m at 20°C, 7 wt% of catalyst nanoparticles (Pt/C), and 35 wt% of a binder (Nafion solid content: 20 wt%).

### <Example 1: Electrode Slurry for Repairing Cracks That Satisfies Parameters>

An electrode slurry for repairing cracks was prepared consisting of 65 wt% of a first solvent (ethanol) having a surface tension of 40 mN/m or less at 20°C, 5 wt% of a second solvent (water) having a surface tension of more than 40 mN/m at 20°C, 5 wt% of catalyst nanoparticles (Pt/C), and 25 wt% of a binder (Nafion solid content: 20 wt%).

### <Example 2: Electrode Slurry for Repairing Cracks Containing Radical-Scavenging Nanoparticles>

An electrode slurry for repairing cracks was prepared in the same manner as in Example 1, except that 4.9 wt% of catalyst nanoparticles (Pt/C) and 0.1 wt% of radical-scavenging nanoparticles (CeO₂) were used instead of 5 wt% of catalyst nanoparticles (Pt/C).

### <Example 3: Electrode Slurry for Repairing Cracks Containing Heat-Dissipating Nanoparticles>

An electrode slurry for repairing cracks was prepared in the same manner as in Example 1, except that 4.9 wt% of catalyst nanoparticles (Pt/C) and 0.1 wt% of heat-dissipating nanoparticles (h-BN) were used instead of 5 wt% of catalyst nanoparticles (Pt/C).

### <Example 4: Electrode Slurry for Repairing Cracks Containing Hygroscopic Nanoparticles>

An electrode slurry for repairing cracks was prepared in the same manner as in Example 1, except that 4.9 wt% of catalyst nanoparticles (Pt/C) and 0.1 wt% of hygroscopic nanoparticles (porous silica with a BET specific surface area of about 640 m²/g) were used instead of 5 wt% of catalyst nanoparticles (Pt/C).

### <Example 5: Electrode Slurry for Repairing Cracks Containing OER Catalyst Nanoparticles>

An electrode slurry for repairing cracks was prepared in the same manner as in Example 1, except that 4.9 wt% of catalyst nanoparticles (Pt/C) and 0.1 wt% of OER catalyst nanoparticles (IrO₂) were used instead of 5 wt% of catalyst nanoparticles (Pt/C).

### [Experimental Example 1: Characterization of Electrode Slurries for Repairing Cracks]

The viscosity, surface tension, and total solid content of the electrode slurry for repairing cracks according to each of the Comparative Examples and the Examples were measured, and the results are shown in Table 1 below.

### 1) Viscosity (cP)

The viscosity of the electrode slurry for repairing cracks was measured using a Brookfield viscosity meter at 20°C.

### 2) Surface Tension (mN/m)

The surface tension of the electrode slurry for repairing cracks was measured using a surface tension meter (Kruss K20) at 20°C according to the De Nouy ring method.

### 3) Total Solid Content

The electrode slurry for repairing cracks was dried sufficiently at a temperature of 100°C or higher until the solvent and dispersion medium were completely evaporated. The total solid content was calculated by measuring the percentage of total solids based on the total weight of the electrode slurry for repairing cracks.

**[Table 1]**

| | Viscosity (cP) at 20°C | Surface tension | Total solid content (wt%) |
|---|---|---|---|
| | | (mN/m) at 20°C | |
| Comparative Example 1 | 120 | 72 | 10 |
| Comparative Example 2 | 48 | 58 | 14 |
| Example 1 | 42 | 49 | 10 |
| Example 2 | 45 | 46 | 10 |
| Example 3 | 48 | 50 | 10 |
| Example 4 | 40 | 45 | 10 |
| Example 5 | 38 | 43 | 10 |

### [Experimental Example 2: Image of Catalyst Layer for Fuel Cell Having Electrode Slurry for Repairing Cracks Applied Thereto]

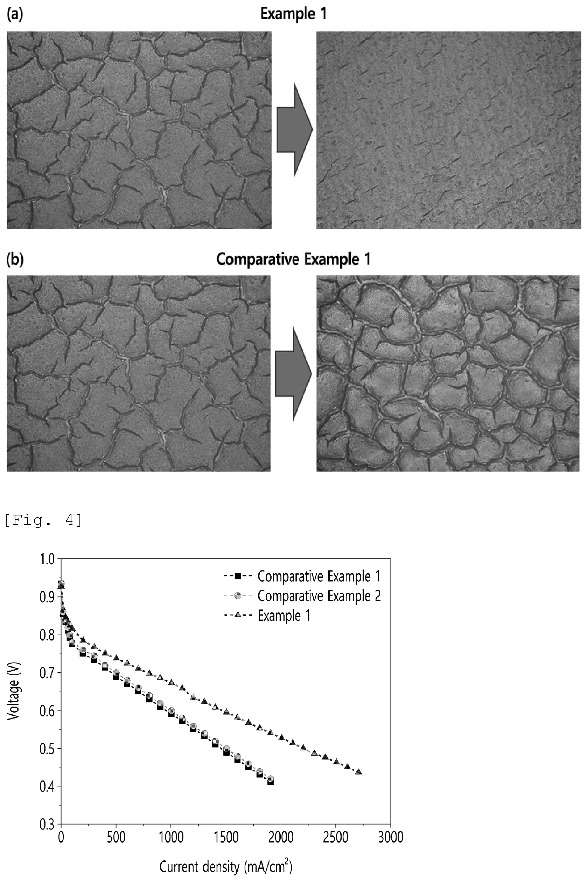

Fig. 3 shows optical microscope images of catalyst layers for a fuel cell, which have applied thereto the electrode slurries for repairing cracks according to Example 1 and Comparative Example 1. Referring to Fig. 3, it can be confirmed that the cracks formed on the surface of the catalyst layer for a fuel cell repaired with the electrode slurry for repairing cracks according to Example 1 are significantly less than those in Comparative Example 1.

### [Preparation Example 2: Manufacturing of Membrane-Electrode Assemblies]

Each of the electrode slurries for repairing cracks according to Preparation Example 1 was applied to a catalyst layer, disposed on one surface of a polymer electrolyte membrane and having cracks formed therein, to a wet thickness of 100 µm by slot-die coating, and then dried at 90°C for 10 minutes, thereby manufacturing membrane-electrode assemblies, each including a catalyst layer for a fuel cell with repaired cracks.

### [Experimental Example 3: Evaluation of Performance and Durability of Membrane-Electrode Assemblies]

The performance and durability of the membrane-electrode assemblies according to Preparation Example 2 were evaluated using the following measurement methods, and the results are shown in Table 2 below.

### 1) Performance

The performance of the membrane-electrode assemblies according to Preparation Example 2 was evaluated by measuring the current density versus voltage using a fuel cell-unit cell evaluation device from Scitech under conditions of 80°C, 100% RH, and atmospheric pressure.

Fig. 4 is a graph regarding the performance of the membrane-electrode assemblies according to Comparative Examples 1 and 2 and Example 1.

Referring to Fig. 4, Example 1 with repaired cracks showed a higher current density at the same voltage compared to Comparative Examples 1 and 2 with repaired cracks.

### 2) Physical Durability and Crack Repair Effect

Evaluation was conducted based on the wet-dry durability evaluation protocol of the U.S. Department of Energy (DOE). Specifically, to evaluate the physical durability of the membrane-electrode assemblies, the hydrogen crossover current density was measured after performing 20,000 wet-dry cycles under 2 min wet-2 min dry cycle, 80°C, and air/air. The results are shown in Table 2 below. The membrane-electrode assemblies of the Examples exhibited very stable physical durability satisfying the DOE standard (H₂ crossover ≤ 15 mA/cm² @ 20,000 wet-dry cycles), indicating that the electrode slurries had a crack repair effect. Here, a hydrogen crossover current density of 10 mA/cm₂ or less may mean that the crack repair effect is better.

**[Table 2]**

| Sample | Hydrogen crossover current density (mA/cm²)@0.2 V | |
|---|---|---|
| | Before wet-dry cycles | After wet-dry cycles |
| Comparative Example 1 | 4.5 | 11.7 |
| Comparative Example 2 | 4.3 | 10.9 |
| Example 1 | 3.3 | 3.8 |
| Example 2 | 3.5 | 4.0 |
| Example 3 | 3.2 | 3.6 |
| Example 4 | 3.2 | 3.6 |
| Example 5 | 3.4 | 3.8 |

Referring to Table 2 above, it was confirmed that the membrane-electrode assemblies repaired with the electrode slurries of Examples 1 to 5, which satisfy the viscosity at 20°C, the surface tension at 20°C and the total solid content, exhibited more stable physical durability compared to the membrane-electrode assemblies repaired with the electrode slurries of Comparative Examples 1 and 2. From the above experimental results, it can be seen that, if at least one of the four factors, including the content of the first solvent, and the viscosity, surface tension and total solid content of the electrode slurry for repairing cracks, does not satisfy the appropriate range, both the performance of the repaired membrane-electrode assembly and the crack repair effect will not be achieved.

Although the preferred embodiments of the present disclosure have been described in detail above, the scope of the present disclosure is not limited thereto, and various modifications and improvements made by those skilled in the art using the basic concepts of the present disclosure as defined in the appended claims also fall within the scope of the present disclosure.

### [Description of Reference Numerals]

10: polymer electrolyte membrane 20: catalyst layer for fuel cell
21: first catalyst layer 22: crack surface
23: second catalyst layer CR: crack region
PR: peripheral region CR': portion of second catalyst layer corresponding to crack region

## Claims

1. An electrode slurry for repairing cracks,
which contains 60 wt% or more of a first solvent having a surface tension of 40 mN/m or less at 20°C, and
which has a surface tension of 65 mN/m or less at 20°C, a viscosity of 100 cP or less at 20°C, and a total solid content of 12 wt% or less.

2. The electrode slurry for repairing cracks according to claim 1, wherein the first solvent comprises at least one selected from the group consisting of an alcohol, acetic acid, propionic acid, oleic acid, carbon tetrachloride, pyrrole, and pyridine.

3. The electrode slurry for repairing cracks according to claim 1, which further contains a second solvent having a surface tension of more than 40 mN/m at 20°C,
wherein a content of the second solvent is 10 wt% or less based on a total weight of the electrode slurry for repairing cracks.

4. The electrode slurry for repairing cracks according to claim 1, which further contains functional nanoparticles.

5. The electrode slurry for repairing cracks according to claim 4, wherein the functional nanoparticles comprise at least one selected from the group consisting of radical-scavenging nanoparticles, catalyst nanoparticles, heat-dissipating nanoparticles, and hygroscopic nanoparticles.

6. The electrode slurry for repairing cracks according to claim 1, which further contains a binder dispersion containing a binder,
wherein the binder is any one selected from the group consisting of a fluorinated ion conductor, a hydrocarbon-based ion conductor, and a mixture thereof.

7. A catalyst layer for a fuel cell, comprising:
a first catalyst layer comprising a crack region; and
a second catalyst layer on the first catalyst layer,
wherein a portion of the second catalyst layer corresponding to the crack region comprises a first region, which extends along a crack surface and contains a first binder, and a second region, which is different from the first region and contains a second binder, and
wherein a content of the first binder per unit volume in the first region is higher than a content of the second binder per unit volume in the second region.

8. The catalyst layer for a fuel cell according to claim 7, wherein a height of the first region in a direction intersecting a direction in which the crack surface extends is more than 0 µm and 2 µm or less.

9. A membrane-electrode assembly comprising the catalyst layer for a fuel cell according to claim 7.

10. A fuel cell comprising the membrane-electrode assembly according to claim 9.
